Europäisches Patentamt

(19) European Patent Office

Office européen des brevets

(11) **EP 1 008 139 B1**

(12) **EUROPEAN PATENT SPECIFICATION**

(45) Date of publication and mention
of the grant of the patent:
**02.02.2005 Bulletin 2005/05**

(51) Int Cl.⁷: **G10L 17/00**

(86) International application number:
**PCT/SE1998/000432**

(21) Application number: **98909925.4**

(22) Date of filing: **10.03.1998**

(87) International publication number:
**WO 1998/040875 (17.09.1998 Gazette 1998/37)**

(54) **SPEAKER VERIFICATION SYSTEM**

**SPRECHERBEWEISSYSTEM**

**SYSTEME D'IDENTIFICATION D'UN LOCUTEUR**

(84) Designated Contracting States:
**CH DE DK FI FR GB LI NL SE**

(30) Priority: **13.03.1997 SE 9700898**

(43) Date of publication of application:
**14.06.2000 Bulletin 2000/24**

(73) Proprietor: **TELIA AB**
**123 86 Farsta (SE)**

(72) Inventors:
• **MELIN, Hakan**
**S-178 31 Ekerö (SE)**
• **SUNDBERG, Erik**
**S-111 31 Stockholm (SE)**

(74) Representative: **Akerman, Marten Lennart et al**
**Albihns Malmö AB**
**Box 4289**
**203 14 Malmö (SE)**

(56) References cited:
**EP-A- 0 744 734**      **WO-A-95/05656**
**WO-A-96/17341**      **JP-A- 7 261 785**
**US-A- 5 522 012**      **US-A- 5 598 507**

## Description

FIELD OF THE INVENTION

The present invention relates to a method at a speaker verification system/speaker identification system which makes possible for the system operator to find out the identity of a customer by means of analysis of a recording of the customer's voice data.

PRIOR ART

In speaker verification systems, systems for automatic verification of the identity of a speaker, the amount of voice data which has to be collected from the customer is a decisive limit to the use. The more parameters a model has, the better it can be adapted to given training data, but at the same time there is needed more and more training data (time which the customer has to spend in an initial phase) to in a reliable way estimate all parameters.

A problem in connection with speaker verification consequently is to create a sufficiently good model of a customer's voice, on the basis of as small an amount of voice data as possible, in order to find out the identity of the customer by means of analysis of the recording of the customer's voice data. By customer here is meant a user of some service with need of check of authorization.

One consequently might say that the above mentioned problem is a type of optimization problem where it is a matter of utilizing smallest possible amount of voice data to in a reliable way be able to appoint the identity of the speaker.

The aim with the present invention consequently is to solve the above mentioned problem.

EP-A-0 744 734 discloses a speaker verification method using mixture decomposition discrimination.

SUMMARY OF THE INVENTION

The above mentioned aim is solved by means of a method at a speaker verification system/speaker identification system which is presented in the characterizing part of the patent claim 1.

The present invention has the advantage, in comparison with previous speaker verification systems/ speaker identification systems, that, in spite of utilizing a minimal amount of voice data, the identity of the speaker can quickly be found out.

Further characteristics are given in the subclaims.

DETAILED DESCRIPTION OF EMBODIMENTS OF THE INVENTION

In technical connections one usually makes a difference between speaker identification and speaker verification.

With speaker identification then is meant a verification system where a speaker identifies himself/herself by speaking just any sentences, at which the identification system analyses the voice and identifies characteristics of the voice by which the speaker identification is performed.

With speaker verification is meant a verification system where a speaker's identity is verified by the speaker speaking (or entering by keypad) a specific in advance decided information, at which the verification system directly confirms the authenticity of the information (and identity) or rejects it (example of such a system is a cash dispenser; in Sweden "Bankomat").

The two systems basically relate to the same thing, which is to distinguish and distinctly find out a speaker's identity.

It consequently should be realized that in the present invention we equate the concepts "speaker verification" and "speaker identification".

The invention is inteded to be used in all speaker verification systems, especially in such which are used in a service where one has access to information about the users.

The voice recording can be made either directly at the equipment, where the verification is performed, or be transferred via different media. Medium can be telephone or other telecommunication media, inclusive computers.

In speaker verification systems today often a "likelihood normalization" is utilized, i.e. a type of probability normalization. In principle these speaker verification systems function in the following way.

Let us suppose that a customer, for instance Leif, has the intention to verify his identity by means of a speaker verification system to get access to a certain service. In this case is assumed that Leif's voice profile is stored since before in a database belonging to the speaker verification system.

When Leif speaks a voice message via for instance a telephone in the speaker verification unit, the voice profile is stored and analysed. The speaker verification unit finds out that the probability is very high that Leif is a man over 40 years old. In addition the speaker verification unit finds out that Leif is speaking staccato. The speaker verification unit now searches in the hierarchy of different groups in the database and finds a group comprising men over 40 who are speaking staccato.

This group is rather limited (for instance 40 persons) and the speaker verification unit compares Leif's stored voice profile with all voice profiles which are stored in this special group. With very great probability the speaker verification unit consequently finds Leif's voice profile in this group, whereupon identification is made.

The above mentioned method consequently is based on that the speaker verification unit on basis of probability finds out to which group in a database a person, for instance Leif, belongs. After that, stored voice profile is compared with all voice profiles in said group.

This method of course is considerably more efficient than if the speaker verification unit indiscriminately should compare stored voice profile with all included voice profiles in the database. This would take an enormous amount of time if the database for instance contained some thousand voice profiles.

The present invention is a further development and improvement of the above mentioned method and is based on that one by using pre-trained reference models as components in a speaker model can benefit from collected data in addition to these which a customer himself/herself speaks in his/her call to be recorded, and by that reduce the lenght of this call. The central idea of the invention is to organize these reference models in a set of pro-models and anti-models. The idea is that the pro-models shall model a quality which the customer has (for instance woman, beween 20 and 25 years) and the anti-model a quality which the customer does not have (for instance man, not between 20 and 25 years). Purely mathematically produced reference models which normally do not correspond to a distinguishable quality of the customer also can be used.

Complementary sets of pro- and anti-models should be used. If the reference models correspond to concrete qualities of the customer, in addition a priori knowledge can be used to control the selection of reference models. This knowledge in different ways can be made accessible in the system.

A more detailed description will be given a bit further on in the description.

In speaker verification connections one uses, as has been mentioned above, "likelihood normalization" where one standardizes the contribution from a customer specific model with one or more "world models" or "impostor models", which with above used terminology are anti-models. The customer specific model corresponds to function $f_c$ in equation (1) below. The novelty in (1) therefore is to combine the anti-models with (complementary) pro-models. Whether it is a novelty to generally make use of *a priori* knowledge to select reference models is doubtful, but the arrangement with pro- and anti-models goes well with the use of *a priori* knowledge. The theory of selecting an optimal set of reference models and a belonging projection is certainly known in the mathematics/signal theory, and consequently is no novelty in itself, but the application of this thinking in connection with speaker verification is according to our opinion quite a novelty.

In the following the invention will be described in more detail.

Regard a speaker model as consisting of a) reference models, and b) a projection on these reference models. The projection can for instance be a weighted sum of contributions from the reference models (a linear combination). In addition a speaker model of course can include model elements which are built exclusively from voice material from the customer himself/herself and which do not use reference models, but the following description focuses on the part where some form of reference model is included.

The reference models are normally trained from speech in a database which is collected in the design phase of the system, i.e. before a customer registers himself/herself in the system. A reference model either can model I) some predetermined entity (for instance "female speaker", "speaker under 16 years" or "call from GSM-telephone"), or II) something determined by mathematical optimization and which by that cannot very well be connected to a specific a priori knowledge as in case I.

Arrange the reference models in one set with pro-models and one set with anti-models and calculate the "hit probability", P, of the total model, so that contributions from the pro-models increase P, and contributions from the anti-models reduce P. This procedure can mathematically be expressed according to equation (1), where $f_p$ and $f_a$ are functions of contributions of the pro- respective anti-models, and together constitute the projection part of the total model. $f_c$ is a function of submodels trained on data from the customer himself/herself. One also can make use of a logarithmic variant of (1).

$$P = f_c\,(c_1, c_2, ..., c_N)\,\frac{f_p(p_1, p_2, ..., p_M)}{f_a(a_1, a_2, ..., a_Q)}$$

If reference models according to case I are used, one can utilize *a priori* knowledge about the customer to build the customer's speaker model, for instance knowledge about the speaker's sex, by selecting right reference models.

*Example:* For a male speaker one can select a pro-model for "male speaker" and an anti-model for "female speaker".

In this way one can in a simple way make benefit from *a priori* knowledge when one builds ones speaker model. This knowledge will be a contribution to collected voice data and one can make a better functioning model with less collected voice data from respective customer. One suitably selects complementary reference models as pro- and anti-models as in the example above. In this way one ought to get a more reliable, balanced model and one can get a discrimination effect by the two complementary models "pulling" in different directions.

The above mentioned "a priori knowledge" may be introduced into the system at different phases and in different ways:

  a) At the (first) call to be recorded and by that in connection with building of the first speaker model. If the customer already is registered in the service and therefore identifies himself/herself to the system at the registration to the speaker verification system, one can utilize customer information which is already stored in a database, for instance sex and age. If the customer is not pre-registered in the service, he/she may present his/her civic registration number at the registration call, and then one can get information about the sex by looking at the civic registration number. One also explicitly can ask about sex and age during the call.

b) After the first call to be recorded. At that, one may already have taken the model into operation, and it will be a matter of rebuilding the model with new information. The information can for instance come from a filled up and sent in form which the customer signs to be allowed to go on with the service after an initial phase. Adaption of speaker model and especially change of topology during its life cycle is treated in Telia's patent application No 9602622-4 relating to "Procedure and arrangement for adaption at for instance speaker verification systems" (Case 520).

Instead of using pure *a priori* knowledge, one may select one's reference models by calculating an optimal set of reference models and belonging projection on these.

The above is only to be regarded as advantageous embodiments of the invention, and the extent of protection of the invention is only defined by what is indicated in the following patent claims.

## Claims

1. Method at a speaker verification system/speaker identification system which makes possible for a system operator to find out a customer's identity by means of analysis of a recording of the customer's voice data, **characterized in the steps of:**

   - organizing reference models in a set of pro-models and a set of anti-models, which models are trained from speech collected in the design phase of the system and stored in a database, wherein said pro-models model qualities which a customer has, and said anti-models model qualities which a customer does not have,
   - building, based on a priori knowledge about a customer, a first speaker model consisting of reference models and a projection of these reference models, i.e. a functional description of contributions of the pro- and anti-models,
   - calculating the hit probability, P, of said first speaker model, i.e. the total probability that said customer belongs to a certain category, so that contributions from the pro-models increase P, and contributions from the anti-models reduce P,
   - storing said first speaker model together with the identity of the customer,
   - at verification/identification, finding the customer's identity with minimal recorded voice data by building a second speaker model based on said speech collected in the design phase in addition to the data which the customer himself/herself speaks in order to be verified/identified, calculating the hit probability, P, of said second speaker model and comparing said second speaker model with stored speaker models in said certain category.

2. Method according to patent claim 1, **characterized in that** said reference models are trained to recognize just any voice information, which voice information has been stored in a database at the design phase of said speaker verification system/speaker identification system before a customer has had time to register himself/herself in said system.

3. Method according to any of the previous patent claims, **characterized in that** the hit probability of said speaker model, i.e. total probability that a certain customer belongs to a certain category, is given by the formula:

$$P = f_c\,(c1,\,c2,...,cN)\,\frac{f_p(p_1,p_2,...,p_M)}{f_a(a_1,a_2...,a_Q)}$$

where P corresponds to the hit probability of the reference model, $f_p$ and $f_a$ are functions of contributions of the pro- respective anti-models which together constitute the projection part of the total model, and $f_c$ is a function of submodels trained on voice data from the customer himself/herself.

## Patentansprüche

1. Verfahren bei einem System zur Verifikation/Identifikation eines Sprechers, um zu ermöglichen, dass ein Systemoperator die Identität eines Kunden mittels Analyse der Aufzeichnung der Sprachdaten des Kunden herausfinden kann, **gekennzeichnet durch** die Schritte:

   - Einrichten von Referenzmodellen in einem Satz Pro-Modelle und einem Satz Anti-Modelle, wobei diese Modelle **durch** Sprache trainiert sind, die in der Designphase des Systems gesammelt worden ist und in einer Datenbank gespeichert worden sind, wobei die Pro-Modelle Qualitäten nachbilden, die ein Kunde hat und die Anti-Modelle Qualitäten nachbilden, die ein Kunde nicht hat,

- Bauen eines ersten Sprechermodells basierend auf einer ersten Kenntnis über einen Kunden, bestehend aus Referenzmodellen und der Projektion dieser Referenzmodelle, d.h. einer funktionalen Beschreibung der Beiträge von Pro- und Anti-Modellen,
- Berechnen der Trefferwahrscheinlichkeit P des ersten Sprechermodells, d.h. der Gesamtwahrscheinlichkeit, dass ein Kunde zu einer gewissen Kategorie gehört, sodass die Beiträge der Pro-Modelle P steigen und die Beiträge der Anti-Modelle P sinken,
- Speichern des ersten Sprechermodells zusammen mit der Identität des Kunden,
- Herausfinden der Kundenidentität bei der Verifikation/Identifikation mit minimal aufgezeichneten Sprachdaten **durch** Bauen eines zweiten Sprechermodels basierend auf der Sprache, die in der Designphase gesammelt worden ist, zusätzlich zu den Daten, die der Kunde selbst gesprochen hat, um verifiziert/identifiziert zu werden, Berechnen der Trefferwahrscheinlichkeit P des zweiten Sprechermodells und Vergleichen des zweiten Sprechermodells mit den gespeicherten Sprechermodellen in der bestimmten Kategorie.

2. Verfahren nach Patentanspruch 1, **dadurch gekennzeichnet, dass** die Referenzmodelle trainiert sind, jede Sprachinformation zu erkennen, wobei die Sprachinformation in der Designphase des Sprecher-Verifikations/Identifikations-Systems gespeichert worden ist, bevor ein Kunde Zeit hatte, sich selbst im System zu registrieren.

3. Verfahren nach einem der vorstehenden Patentansprüche, **dadurch gekennzeichnet, dass** die Trefferwahrscheinlichkeit des Sprechermodells, d.h. die Gesamtwahrscheinlichkeit, dass ein gewisser Kunde zu einer gewissen Kategorie gehört, durch die Formel gegeben ist:

$$P = f_c(c1, c2,..., cN)\frac{f_p(p_1,p_2,...,p_M)}{f_a(a_1,a_2,...,a_Q)}.$$

wobei P der Trefferwahrscheinlichkeit des Referenzmodels entspricht, $f_p$ und $f_a$ Funktionen der Beteiligung der Pro- bzw. Anti-Modelle sind, die zusammen den Projektionsteil des Gesamtmodells bilden und $f_c$ eine Funktion der Submodelle ist, die auf die Sprachdaten vom Kunden selbst trainiert worden sind.

**Revendications**

1. Procédé dans un système de vérification de locuteur / système d'identification de locuteur qui permet à un opérateur du système de trouver l'identité d'un client au moyen de l'analyse d'un enregistrement des données vocales du client, **caractérisé en ce qu'**il comprend les étapes de :

   organisation de modèles de référence en un ensemble de pro-modèles et un ensemble d'anti-modèles, ces modèles étant établis à partir de paroles collectées dans la phase de conception du système et stockés dans une base de données, de sorte que les dits pro-modèles modélisent des qualités qu'un client possède et les dits anti-modèles modélisent des qualités qu'un client ne possède pas,
   construction, sur la base d'une connaissance a priori concernant un client, d'un premier modèle de locuteur consistant en modèles de référence et en une projection de ces modèles de référence, c'est-à-dire une description fonctionnelle de contributions des pro- et anti-modèles,
   calcul de la probabilité de succès, P, du dit premier modèle de locuteur, c'est-à-dire de la probabilité totale que le dit client appartienne à une certaine catégorie, de sorte que les contributions des pro-modèles augmentent P et les contributions des anti-modèles réduisent P,
   stockage du dit premier modèle de locuteur en association avec l'identité du client,
   lors de la vérification / identification, recherche de l'identité du client avec des données vocales enregistrées minimales par construction d'un deuxième modèle de locuteur basé sur les dites paroles collectées dans la phase de conception en plus des données que le client lui-même prononce afin d'être vérifié / identifié, calcul de la probabilité de succès P du dit deuxième modèle de locuteur, et comparaison du dit deuxième modèle de locuteur avec les modèles de locuteur stockés dans la dite certaine catégorie.

2. Procédé selon la revendication 1, **caractérisé en ce que** les dits modèles de référence sont soumis à un apprentissage pour reconnaître juste une information vocale quelconque, cette information vocale ayant été stockée dans une base de données lors de la phase de conception du dit système de vérification de locuteur / système d'identification de locuteur avant qu'un client ait eu le temps de s'enregistrer dans le dit système.

3. Procédé selon une quelconque des revendications précédentes, **caractérisé en ce que** la probabilité de succès du dit modèle de locuteur, c'est-à-dire la probabilité totale qu'un certain client appartienne à une certaine catégorie, est donnée par la formule :

$$P = f_c(c1, c2,..., cN) \frac{f_p(p_1, p_2,...,p_M)}{f_a(a_1, a_2,...,a_Q)}$$

où P correspond à la probabilité de succès du modèle de référence, $f_p$ et $f_a$ sont des fonctions de contributions des pro-modèles et anti-modèles respectivement qui constituent ensemble la partie de projection du modèle total, et $f_c$ est une fonction de sous-modèles entraînés sur des données vocales venant du client lui-même.